# EUROPÄISCHE PATENTANMELDUNG

(11) **EP 3 996 164 A1**
(43) Veröffentlichungstag der Anmeldung: **11.05.2022**
(21) Anmeldenummer: 21206517.1
(22) Anmeldetag: 04.11.2021
(51) Int. Cl.: H01M 4/04, D21G 1/00, D21G 1/02, H01M 10/052

(54) **KALANDER UND VERFAHREN ZUM BEARBEITEN EINES ELEKTRODENBANDES**

(30) Priorität: 09.11.2020 DE 102020214052
(71) Anmelder: VOLKSWAGEN AG, 38440 Wolfsburg (DE)
(72) Erfinder: DERSCH, Sebastian, 38118 Braunschweig (DE); JAMADAR, Kartik, 38442 Wolfsburg (DE); SCHOPF, Sven, 38116 Braunschweig (DE)
(74) Vertreter: FDST Patentanwälte

(57) **Zusammenfassung**

Die Erfindung betrifft ein Verfahren zum Bearbeiten eines Elektrodenbandes (4) mittels eines Kalanders (2), welcher eine erste Walze (6), eine zweite Walze (8), sowie eine dritten Walze (10) aufweist, wobei die erste Walze (6), die zweiten Walze (8), sowie die dritte Walze (10) übereinander angeordnet sind, und wobei für einen ersten Kalandervorgang ein erster Spalt (12) zwischen der ersten Walze (6) und der zweiten Walze (8) und für einen zweiten Kalandervorgang ein zweiter Spalt (14) zwischen der zweiten Walze (8) und der dritten Walze (10) gebildet ist. Gemäß dem Verfahren wird beim ersten Kalandervorgang das Elektrodenband (4) entsprechend einer vorgegebener Soll-Dicke (d_{Soll}) verdichtet, und der zweite Spalt (14) derart eingestellt, dass eine Ungleichmäßigkeit der Dicke des Elektrodenbandes (4) ausgeglichen wird. Des Weiteren betrifft die Erfindung einen solchen Kalander (2).

## Beschreibung

Die Erfindung betrifft ein Verfahren zum Bearbeiten eines Elektrodenbandes mittels eines Kalanders. Des Weiteren betrifft die Erfindung einen solchen Kalander.

Ein elektrisch angetriebenes Kraftfahrzeug weist typischerweise eine Traktionsbatterie (Hochvoltbatterie, HV-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Eine solche, als Lithium-Ionen-Batterie ausgebildete, Traktionsbatterie umfasst mehrere elektrisch miteinander verschaltete Batteriezellen, in denen jeweils eine Anzahl an blattförmigen Anoden, im Folgenden als Anodenblätter bezeichnet, und blattförmige Kathoden, im Folgenden als Kathodenblätter bezeichnet, aufgenommen sind. Jedes der Anodenblätter und jedes der Kathodenblätter ist dabei anhand einer elektrisch leitenden Folie als Substrat gebildet, welche beidseitig mit einer sogenannten Aktivschicht versehen ist. Geeigneter Weise wird für jedes der Kathodenblätter eine Aluminiumfolie verwendet, auf die ein Lithium-Metall-Oxid aufgebracht ist. Für jedes der Anodenblätter wird insbesondere eine Kupferfolie mit darauf aufgebrachtem Graphit als Aktivmaterial herangezogen.

Beispielsweise wird im Zuge der Herstellung der Anodenblätter und der Kathodenblätter das Aktivmaterial - gegebenenfalls vermischt mit einem Binder und einem Additiv wie Leitruß - mit einem Lösungsmittel vermischt. Die Lösung wird anschließend auf das als bandförmige Folie (Folienband) ausgebildete Substrat aufgetragen und getrocknet. Das mit dem Aktivmaterial versehene, also beschichtete, Folienband, welches im Folgenden als Elektrodenband bezeichnet wird, wird darauf folgend zum Verdichten des Aktivmaterials mit einem Kalander bearbeitet. Die Anodenblätter bzw. die Kathodenblätter werden abschließend aus dem als Anodenband bzw. als Kathodenband ausgebildeten Elektrodenband vereinzelt, beispielsweise aus- oder abgeschnitten.

Für eine hohe Kapazität der Batteriezelle mit solchen Anodenblättern und Kathodenblättern, welche im Folgenden zusammenfassend als Elektrodenblätter bezeichnet werden, ist dabei eine gleichmäßige Schichtdicke der Aktivmaterialien erforderlich. Bei der Verdichtung des Aktivmaterials anhand des Kalanders beträgt deshalb eine Toleranz für die Dicke des beschichteten Substrats, also des bearbeiteten Elektrodenbandes, ca. 1µm.

Beim Bearbeiten (Kalandern, Kalandrieren) des Elektrodenbandes anhand des Kalanders können sich die Walzen des Kalanders aufgrund der vergleichsweise hohen auf das Elektrodenband einwirkenden Kräfte verformen. Dies resultiert typischerweise in einer höheren Dicke des Elektrodenbandes in demjenigen Bereich, welcher von der Mitte der Walzen bezüglich deren axialer Ausdehnung bearbeitet wird, im Vergleich zu demjenigen Bereich, der von einem Endbereich der Walzen hinsichtlich deren axialer Ausdehnung bearbeitet wird. Hierbei besteht die Gefahr, dass die Toleranz für die Dicke des kalandrierten Elektrodenbandes überschritten wird.

Es sind Methoden bekannt, um diese Verformung zu vermeiden. Beispielsweise werden die Walzen mit einer Bombierung versehen, so dass diese axial mittig einen größeren Durchmesser aufweisen als axial endseitig. Beispielsweise können die bombierten Walzen zusätzlich vorverspannt werden. Alternativ zur Bombierung und ggf. zum Vorverspannen können die Walzen auch hydraulisch vorgebogen werden. Als weitere Alternative können sogenannte Stützwalzen (backup rolls) verwendet werden.

Anhand dieser Methoden soll der Deformation der Walzen entgegengewirkt oder eine solche ausgeglichen werden, so dass eine größere Dicke des bearbeiteten Elektrodenbands in dessen Mitte im Vergleich zu dessen axialen Enden verhindert oder dieser Unterschied zumindest reduziert wird. Diese Methoden sind allerdings vergleichsweise aufwändig und/oder kostenintensiv. Zudem kann das Vorbiegen bzw. das Vorverspannen der Walzen nicht ausreichend sein, um die Deformation der Walzen beim Bearbeiten vollständig auszugleichen. Bei der Verwendung einer bombierten Walze ist deren Wölbung nachteilig konstant, so dass bei einer Änderung der zum Verdichten aufgebrachten Last die nunmehr unpassende Stärke der Wölbung der Deformationskraft nicht stark genug oder zu stark entgegenwirkt, was in einer ungleichmäßige Dicke des bearbeiteten Elektrodenbandes resultiert.

Der Erfindung liegt die Aufgabe zugrunde, ein besonders geeignetes Verfahren zum Bearbeiten eines Elektrodenbandes anhand eines Kalanders anzugeben, bei dem das bearbeitete Elektrodenband eine möglichst gleichmäßige Dicke aufweist. Des Weiteren soll ein solcher Kalander angegeben werden.

Bezüglich des Verfahrens wird die Aufgabe erfindungsgemäß gelöst durch die Merkmale des Anspruchs 1. Hinsichtlich des Kalanders wird die Aufgabe mit den Merkmalen des Anspruchs 5 erfindungsgemäß gelöst. Vorteilhafte Ausgestaltungen und Weiterbildungen sind Gegenstand der Unteransprüche. Dabei gelten die Ausführungen im Zusammenhang mit dem Verfahren sinngemäß auch für den Kalander und umgekehrt.

Das Verfahren dient dem Bearbeiten eines Elektrodenbandes mittels eines Kalanders, was auch als Kalandern oder Kalandrieren bezeichnet wird. Unter einem Elektrodenband ist hierbei eine bandförmige Folie mit einer, insbesondere beidseitig, darauf aufgebrachten Beschichtung mit Aktivmaterial zu verstehen.

Der beim Verfahren verwendete Kalander weist eine erste Walze, eine zweite Walze sowie eine dritte Walze auf, welche übereinander angeordnet sind. Somit sind deren Drehachsen in einer gemeinsamen Ebene angeordnet. Die Richtung entlang der Achsen der ersten und der zweiten Walze wird dabei als Axialrichtung bezeichnet. Für einen ersten Kalandervorgang, welcher zum Verdichten des Elektrodenbandes, insbesondere dessen Beschichtung vorgesehen ist, ist ein erster Spalt zwischen der ersten Walze und der zweiten Walze gebildet. Zudem ist für einen zweiten Kalandervorgang, welcher dem Vereinheitlichen (dem Vergleichmäßigen) der Dicke der Elektrode dient, ein zweiter Spalt zwischen der zweiten Walze und der dritten Walze gebildet.

Verfahrensgemäß wird beim ersten Kalandervorgang das Elektrodenband, insbesondere dessen Beschichtung entsprechend einer vorgegebenen Soll-Dicke verdichtet. Beispielsweise wird oder ist dabei der erste Spalt derart eingestellt, dass dieser eine Spaltbreite aufweist, welche gleich der vorgegebenen Soll-Dicke ist. Alternativ und bevorzugt wird oder ist die Spaltbreite des ersten Spalts geringfügig, beispielsweise um 2%, um 3%, oder um 5%, kleiner als die vorgegebene Soll-Dicke eingestellt, so dass eine auch als Rückfederung bezeichnete elastische Verformung, insbesondere Ausdehnung, des Elektrodenbandes nach dem ersten Kalandervorgang berücksichtigt ist.

Beispielsweise wird beim ersten Kalandervorgang das Elektrodenband hierbei mit einer Linienlast größer oder gleich 1300 N/mm, bevorzugt größer oder gleich 1500 N/mm bearbeitet. Sofern das Elektrodenband als Kathodenband ausgebildet ist, ist die Linienlast insbesondere größer oder gleich 2500N/mm oder vorzugsweise größer oder gleich 3000 N/mm.

Beim ersten Kalandervorgang wirkt eine entsprechende (Verformungs-)Kraft auf die erste und auf die zweite Walze. Aufgrund dessen besteht die Gefahr, dass sich die erste und die zweite Walze in deren Mitte hinsichtlich der Axialrichtung voneinander weg biegen, also dass sich erste Walze, insbesondere deren axial mittlerer Bereich, von der zweiten Walze weg biegt, und sich die zweite Walze, insbesondere deren axial mittlerer Bereich, zur dritten Walze hin biegt. Aufgrund einer solchen Biegung der ersten und/oder der zweiten Walze ist die Dicke des Elektrodenbandes entlang der Axialrichtung nicht konstant. Insbesondere weist das Elektrodenband eine größere Dicke in einem axial mittleren Bereich auf, welcher hinsichtlich der Axialrichtung von der Mitte der ersten und der zweiten Walze bearbeitet wird, als in dessen axial endseitigen Bereichen, als in denjenigen Bereichen, welche hinsichtlich der Axialrichtung von den Endbereichen der ersten und der zweiten Walze bearbeitet werden. Das Elektrodenband weist somit einen fassförmigen Querschnitt senkrecht zu dessen Bandlängsrichtung, also eine Wölbung, auf. Folglich weicht die Dicke des Elektrodenbandes von der Soll-Dicke ab.

Vorzugsweise wird das Elektrodenband an der zweiten Walze anliegend zum zweiten Spalt hin verfahren.

Weiterhin wird verfahrensgemäß der zweite Spalt, insbesondere dessen Längsprofil, also dessen Spaltbreite entlang der Axialrichtung, für den zweiten Kalandervorgang derart eingestellt, dass eine Ungleichmäßigkeit der Dicke des Elektrodenbandes, insbesondere dessen fassförmige Verdickung aufgrund der Biegung der ersten und/oder zweiten Walze, ausgeglichen wird. Somit wird also eine Abweichung der Dicke des Elektrodenbandes von der Soll-Dicke zumindest reduziert. Vorzugsweise erfolgt das Einstellen des zweiten Spaltes im Zuge einer Regelung. Das Einstellen des zweiten Spaltes erfolgt also im Betrieb des Kalanders.

Vorteilhaft wird eine Biegung der zweiten Walze aufgrund des ersten Kalandervorgangs anhand des zweiten Kalandervorgangs und der damit einhergehenden Kraft auf die zweite Walze reduziert. Die zweite Walze wird dadurch weniger beansprucht.

Geeigneter Weise wird der zweite Spalt dabei derart eingestellt, dass die Dicke des Elektrodenbandes nach dem zweiten Kalandervorgang der Soll-Dicke entspricht.

Aufgrund der Verdichtung des Elektrodenbandes beim ersten Kalandervorgang entsprechend der Soll-Dicke und damit einhergehend bei einer vergleichsweise hohen Linienlast, ist für den zweiten Kalandervorgang eine vergleichsweise kleine Linienlast notwendig. Die Linienlast für den zweiten Kalandervorgang wird folglich auf weniger als 1/5, insbesondere weniger als 1/7, vorzugsweise weniger als 1/10 der Linienlast des ersten Kalandervorgang eingestellt. Beim zweiten Kalandervorgang wird das Material der Beschichtung gleichmäßig verteilt, also zu den axialen Enden des Elektrodenbandes hin verteilt. Eine weitere Verdichtung findet dabei nicht oder lediglich in geringfügigem Maße statt.

Unter der Soll-Dicke ist dabei diejenige Dicke des bearbeiteten Elektrodenbandes zu verstehen, die dieses nach dem Verfahren aufweisen soll.

Zusammenfassend erfolgt die Bearbeitung des Elektrodenbandes anhand von zwei Kalandervorgängen, von denen der erste Kalandervorgang der Verdichtung des Elektrodenbandes dient und der zweite im Wesentlichen dem Ausgleich von Ungleichmäßigkeiten der Dicke des Elektrodenbandes. Zur Verdichtung des Elektrodenbandes sind weitere Kalandervorgänge nicht notwendig und zweckmäßigerweise auch nicht vorgesehen. Vorteilhaft werden für den ersten Kalandervorgang, also für das Verdichten keine der eingangs erwähnten und vergleichsweise aufwändigen und/oder kostenintensiven Methoden, nämlich eine Bombierung, ein Vorverspannen oder Vorbiegen der ersten und/oder der zweiten Walze oder die Verwendung einer Stützrolle genutzt. Das erfindungsgemäße Verfahren ist somit vergleichsweise kostengünstig.

Gemäß einer vorteilhaften Ausgestaltung des Verfahrens wird zum Einstellen des zweiten Spaltes die Achse der dritten Walze verfahren und/oder gedreht. Insbesondere erfolgen das Verfahren und/oder das Drehen der Achse der dritten Walze in der mittels der Achsen der ersten und der zweiten Walze aufgespannten Ebene.

Insbesondere wird die Achse der dritten Walze endseitig jeweils anhand eines Lagers gelagert. Geeigneter Weise wird beim Verfahren und/oder beim Verdrehen zumindest eines dieser beiden Lager zur zweiten Walze hin oder von dieser weg verfahren. Jedes der beiden Lager ist dabei unabhängig vom jeweils anderen Lager verfahrbar. Auf diese Weise ist die Achse der dritten Walze nicht nur parallel zur Achse der zweiten Walze hin oder von dieser weg verfahrbar, sondern es ist auch eine Neigung der Achse der dritten Walze gegenüber der Achse der zweiten Walze einstellbar.

Vorteilhaft ist auf diese Weise die Spaltbreite des zweiten Spaltes einstellbar, wobei der Spalt auch derart eingestellte sein kann, dass die Spaltbreite nicht konstant entlang der Axialrichtung ist.

Gemäß einer vorteilhaften Weiterbildung wird zusätzlich oder alternativ hierzu zum Einstellen des zweiten Spaltes eine Wölbung, insbesondere die Stärke der Wölbung, der dritten Walze eingestellt. Somit ist die Spaltbreite des zweiten Spaltes nicht nur konstant sondern auch variabel in Axialrichtung einstellbar. Auf diese Weise ist besonders vorteilhaft ein vergleichsweise genauer Ausgleich der Ungleichmäßigkeit der Dicke des Elektrodenbandes ermöglicht, mit anderen Worten ist die Dicke des Elektrodenbandes vergleichsweise genau über dessen gesamte Fläche an die vorgegebene Soll-Dicke anpassbar.

Gemäß einer zweckmäßigen Ausgestaltung des Verfahrens wird die Dicke des Elektrodenbandes nach dem zweiten Kalandervorgang an mindestens drei, vorzugsweise an mindestens vier, Stellen gemessen. Diese Stellen sind dabei in Axialrichtung, also in einer Richtung parallel zu den Achsen der ersten und der zweiten Walze beabstandet. Auf diese Weise wird die Dicke des verdichteten Elektrodenbandes sowohl endseitig (randseitig) als auch mittig bezüglich dieser Richtung ermittelt. Der erste Spalt und/oder der zweite Spalt werden in Abhängigkeit der ermittelten Dicken eingestellt. Die Einstellung des ersten und/oder des zweiten Spaltes wiederum beeinflusst die Dicke des Elektrodenbandes. Also werden der erste Spalt und/oder der zweite Spalt geregelt. Ist beispielsweise die ermittelte Dicke des Elektrodenbandes an beiden Enden in Axialrichtung zu hoch oder zu gering, wird der erste Spalt und damit einhergehend die aufgebrachte Linienlast nachgestellt. Weist das Elektrodenband lediglich an einem axialen Ende einen zu hohen oder eine zu geringe Dicke auf, wird beispielsweise die Achse der dritten Walze gegen die Achse der zweiten Walze entsprechend geneigt. Weiter beispielsweise wird die Wölbung der dritten Achse in Anhängigkeit der Differenz einer der axial endseitig ermittelten Dicken und der oder einer der axial mittig ermittelten Dicke(n) vergrößert oder verkleinert.

Beispielsweise wird zusätzlich die Dicke des Elektrodenbandes vor dem ersten Kalandervorgang gemessen und eine Linienlast für den ersten Kalandervorgang und/oder eine Spaltbreite des ersten Spalts entsprechend dieser Messwerte eingestellt.

Zusammenfassend ist es anhand des Einstellens des zweiten Spaltes vorteilhaft ermöglicht, das verdichtete Elektrodenband vergleichsweise genau mit der vorgegebenen Soll-Dicke herzustellen, wobei insbesondere eine Abweichung von der Soll-Dicke, welche Abweichung aufgrund der Verformung der ersten und der zweiten Walze beim Verdichten der Beschichtung im ersten Kalandervorgang entsteht, vermieden oder zumindest reduziert wird.

Erfindungsgemäß weist ein Kalander zum Bearbeiten eines Elektrodenbandes die erste Walze, die zweite Walze und die dritte Walze auf, wobei die drei Walzen übereinander angeordnet sind. Zudem ist zwischen der ersten Walze und der zweiten Walze der erste Spalt für den ersten Kalandervorgang zum Verdichten des Elektrodenbandes gebildet, weiterhin ist zwischen der zweiten Walze und der dritten Walze der zweite Spalt für den zweiten Kalandervorgang zum Ausgleich einer Ungleichmäßigkeit der Dicke des Elektrodenbandes gebildet, welche Ungleichmäßigkeit, also welche Abweichung von der Soll-Dicke, insbesondere aus einer Biegung der ersten und der zweiten Walze im Zuge des ersten Kalandervorgangs resultiert.

Der Kalander ist vorzugsweise zur Durchführung des Verfahrens in einer der oben beschriebenen Varianten vorgesehen und eingerichtet.

Allenfalls ist der zweite Spalt, insbesondere dessen Längsprofil, einstellbar. Vorzugsweise ist das Längsprofil regelbar. Somit ist das Längsprofil im Betrieb des Kalanders veränderbar.

In Geeigneter Ausgestaltung ist der Kalander dazu eingerichtet und vorgesehen, dass anhand der ersten Walze und anhand der zweiten Walze für den ersten Kalandervorgang eine Linienlast beispielsweise größer oder gleich 1300 N/mm (also 1300 Newton oder mehr pro Millimeter Ausdehnung des Elektrodenbandes in Axialrichtung), insbesondere größer oder gleich 1500 N/mm, zur Bearbeitung des Elektrodenbandes bereitstellbar ist. Dabei beträgt die Breite des Elektrodenbandes, also dessen Ausdehnung in Axialrichtung, beispielsweise zwischen 1000 mm und 1500 mm. Auf diese Weise ist es ermöglicht, dass zum Ausgleich der Ungleichmäßigkeit der Dicke des Elektrodenbandes beim zweiten Kalandervorgang eine vergleichsweise kleine Linienlast aufgebracht werden muss. Insbesondere ist der Kalander dazu eingerichtet und vorgesehen, dass anhand der zweiten und der dritten Walze weniger als 1/5, insbesondere weniger als 1/7, vorzugsweise weniger als 1/10 der Linienlast für den ersten Kalandervorgang aufgebracht wird und/oder aufbringbar ist.

Gemäß einer vorteilhaften Ausgestaltung weist der Kalander eine Stützwalze (Backup-roll) zum Andrücken des Elektrodenbandes an die zweite Walze nach dem ersten Kalandervorgang auf. Auf diese Weise wird das Elektrodenband an der zweiten Walze umgelenkt. Die Stützwalze ist also bezüglich der Förderrichtung des Elektrodenbandes zwischen dem ersten und dem zweiten Spalt angeordnet. Auf diese Weise wird vorteilhaft eine weitere Faltenbildung vermieden.

Die die Stützwalze weist an deren Mantelfläche, mit anderen Worten an deren koaxial die Achse der Stützwalze umschließenden Fläche, mit noch anderen Worten an derjenigen Fläche, an welcher das Elektrodenband beim Andrücken an die zweite Walze anliegt, eine emporstehende Struktur auf, welche der Erzeugung einer Querzugspannung, also einer Zugspannung in Axialrichtung, auf das Elektrodenband dient.

Anhand der Struktur und der entsprechenden Querzugspannung wird vorteilhaft eine Welligkeit des Elektrodenbandes und/oder Falten im Elektrodenband reduziert oder sogar entfernt, welche Welligkeit und/oder Falten beim ersten Kalandervorgang entstehen können. Das Elektrodenband wird also geglättet.

Zusammenfassend erfolgt anhand der Stützwalze keine oder lediglich eine vergleichsweise geringe Verdichtung des Elektrodenbandes. Vielmehr dient diese zum einen dem Andrücken des Elektrodenbandes an die zweite Walze sowie zum anderen zur Erzeugung einer Querzugspannung auf das Elektrodenband. Beispielsweise ist die Stützwalze hierzu anhand eines Metallkerns, insbesondere Stahlkerns gebildet, welcher mit einem Mantel aus Kunststoff, vorzugsweise aus gummiartigem, somit elastisch verformbarem, Material wie beispielsweise Polyurethan versehen ist. Dieser Mantel umfasst den Metallkern umfangsseitig und weist an dessen radial bezüglich der Achse außenseitigen Oberfläche die Struktur auf.

Gemäß einer zweckmäßigen Ausgestaltung weist die Struktur von der Mantelfläche der Stützwalze emporstehende Fortsätze auf, welche sich bezüglich der Achse der Stützwalze schrauben- oder spiralförmig auf der Mantelfläche erstreckt. Alternativ hierzu sind der oder jeder der Fortsätze nach Art einer Rippe oder eines Steges ausgebildet, welche in Draufsicht senkrecht zur Achse gegen diese um 30° bis 60°, um insbesondere 45°, und/oder um -30° bis - 60°, insbesondere um - 45° geneigt sind.

Allenfalls beträgt die Höhe der Struktur geeigneter Weise 50 µm bis 150 µm, vorzugsweise 100 µm.

Gemäß einer vorteilhaften Weiterbildung ist eine Wölbung der dritten Walze, insbesondere die Wölbung an deren der zweiten Walze zugewandten Seite, einstellbar. Auf diese Weise kann, wie oben im Zusammenhang mit dem Verfahren beschrieben, der zweite Spalt eingestellt werden.

Zweckmäßiger weise ist zum Einstellen dieser Wölbung eine Bombierwalze vorgesehen, welche unterhalb der dritten Walze angeordnet ist. Mit anderen Worten ist die Bombierwalze auf der der zweiten Walze abgewandten Seite der dritten Walze angeordnet. Mit noch anderen Worten sind die Achsen der zweiten, der dritten und der Bombierwalze in einer gemeinsamen Ebene angeordnet, wobei die dritte Walze zwischen der zweiten Walze und der Bombierwalze angeordnet ist. Die Bombierwalze ist dabei in Kontakt mit der dritten Walze, liegt also an ihr an. Zudem ist unterhalb der Bombierwalze, also auf der der dritten Walze abgewandten Seite der Bombierwalze, zumindest ein Stellmittel angeordnet, welche dazu vorgesehen und eingerichtet ist, eine Kraft in Richtung der zweiten Walze auf die Bombierwalze zu bewirken. Zusammenfassend sind also die dritte Walze, die Bombierwalze und das mindestens eine Stellmittel übereinander angeordnet, wobei die Bombierwalze zwischen der dritten Walze und dem mindestens einen Stellmittel angeordnet ist. In Folge dieser Kraft wird die Bombierwalze sowie die an dieser anliegende dritte Walze entsprechend verformt, also gewölbt. Vorzugsweise sind zumindest zwei derartige Stellmittel unter der Bombierwalze angeordnet, welche in Axialrichtung zueinander beabstandet sind, so dass die Wölbung vergleichsweise genau eingestellt werden kann.

In geeigneter Ausgestaltung weist das Stellmittel einen, insbesondere kegel- oder kegelstumpfförmigen Dorn auf, welcher in Axialrichtung verfahrbar ist. Der Dorn ist an dessen Kegelmantel, von zueinander separaten Backen umgeben, die radial verstellbar, in Axialrichtung allerdings feststehend sind. Mit anderen Worten sind umfangsseitig des Dorns die Backen angeordnet. Der Dorn durchragt somit eine von den Backen gebildete Spreizhülle. Bei Verfahren des Dorns in Axialrichtung werden folglich die Backen in Radialrichtung verschoben. Der Dorn wirkt also nach Art eines Spreizdorns. Geeigneter Weise sind die Backen kreissegmentartig geformt, so dass diese an deren radialen Enden gerundet sind und an der Bombierwalze rollen können. Die Backen decken dabei den Dorn in Umfangsrichtung möglichst vollständig ab.

Gemäß einer geeigneten Ausgestaltung ist die dritte Walze unter Bildung einer Bombierung mit einem Mantel versehen. Der Mantel umfasst hierzu die Mantelfläche der dritten Walze. Der Mantel ist beispielsweise aus Stahl oder aus einem, insbesondere gummiartigen, also elastisch verformbaren, Kunststoff gebildet. Beispielswiese weist der Mantel radial außenseitig eine Chromschicht auf, welche vergleichsweise stark beanspruchbar ist. Vorteilhaft kann ein solcher Mantel vergleichsweise einfach, beispielsweise im Zuge einer Wartung, montiert und demontiert werden. Weiterhin kann - durch die Verwendung von Mänteln mit unterschiedlicher Bombierung - die dritte Walze auch für die Bearbeitung unterschiedlicher Materialen verwendet werden, für die jeweils eine unterschiedlich starke Bombierung geeignet ist. Alternativ hierzu ist die dritte Walze selbst mit einer Bombierung versehen.

Gemäß einer vorteilhaften Ausgestaltung sind die Lager der Achse der dritten Walze unabhängig voneinander zur zweiten Walze hin oder von dieser weg verfahrbar. Wie im Zusammenhang mit dem Verfahren beschrieben, kann auf diese Weise der zweite Spalt eingestellt werden.

Gemäß einer zweckmäßigen Ausgestaltung weist der Kalander weiterhin ein Messgerät auf, welches der Bestimmung der Dicke des Elektrodenbandes nach dem zweiten Kalandervorgang an mindestens drei, vorzugsweise an mindestens vier, Stellen dient. Diese drei Stellen sind dabei in Axialrichtung zueinander beabstandet. Geeigneter Weise ist das Messgerät als ein Ultraschall-Messgerät ausgebildet.

Zweckmäßigerweise werden die ermittelten Dicken - wie im Zusammenhang mit dem Verfahren ausgeführt - zum Einstellen des ersten und/oder des zweiten Spaltes verwendet.

Gemäß einer geeigneten Ausgestaltung weist der Kalander hierzu ein Regelgerät auf. Anhand dessen kann der erste und/oder der zweite Spalt eingestellt werden und wird zweckmäßigerweise auch entsprechend eingestellt. Das Einstellen des zweiten Spaltes erfolgt dabei durch Verfahren zumindest eines der Lager der Achse der dritten Walze und/oder durch Einstellen der Wölbung der dritten Walze. Dabei erfolgen das Verfahren der Lager und/oder das Einstellen der Wölbung insbesondere in Abhängigkeit der anhand des Messgeräts ermittelten Dicken. Gemäß einer vorteilhaften Ausgestaltung wird zum Verfahren des oder jedes Dorns in Axialrichtung ein Piezoelement verwendet. Insbesondere dehnt sich das Piezoelement in Axialrichtung oder zieht sich in Axialrichtung beim Anlegen einer entsprechenden Spannung zusammen, so dass der mit dem Piezoelement gekoppelte Dorn verfahren wird.

Alternativ oder bevorzugt zusätzlich werden die Lager der Achse der dritten Walze anhand von solchen Piezoelementen verfahren.

Das Piezoelement bzw. die Piezoelemente arbeiten also nach Art eines Piezoaktors. Solche Piezoelemente ermöglichen dabei ein vergleichsweise schnelles Verfahren des oder der Lager bzw. des Dorns, insbesondere im Vergleich zu einer hydraulisch arbeitenden Vorrichtung. Somit ist bei einer Abweichung der ermittelten Dicken des Elektrodenbandes der zweite Spalt vergleichsweise schnell zum Ausgleich dieser Abweichungen einstellbar. Damit einhergehen ist vorteilhaft auch ein Bereich des kontinuierlich im Kalander geförderten Elektrodenbandes, welcher bis zum Nachstellen des zweiten Spalts mit der (noch) von der Soll-dicke abweichenden Dicke entsteht, reduziert. Die Verwendung solcher Piezoelemente ist dabei insbesondere aufgrund der vergleichsweise geringen Linienlast beim zweiten Kalandervorgang ermöglicht. Ein Einstellen des zweiten Spaltes bei höheren Linienlasten wäre nicht oder lediglich vergleichsweise langsam anhand solcher Piezoelemente möglich.

Soll dennoch beim zweiten Kalandervorgang anhand der zweiten und der dritten Walze eine vergleichsweise hohe Last aufgebracht werden, beispielsweise eine (Gesamt-)Last, welche größer als 15t (Tonnen), insbesondere größer als 20t, ist, so kann ein Piezoelement, insbesondere für die oben beschriebene Regelung, verwendet werden, um ein Proportionalventil eines hydraulischen Zylinders einzustellen. Zusammenfassend können auf diese Weise auch beim zweiten Kalandervorgang vergleichsweise hohe Lasten realisiert werden, wobei allerdings eine solche hydraulische Verstellung eine vergleichsweise hohe Reaktionszeit aufweist.

Zusammenfassend ist das Regelgerät zum Regeln/Einstellen der ersten und/oder des zweiten Spaltes eingerichtet, und zwar derart, dass das Elektrodenband nach zweitem Kalandervorgang die vorgegebene Soll-Dicke aufweist oder dieser zumindest angenähert wird.

Nachfolgend werden Ausführungsbeispiele der Erfindung anhand einer Zeichnung näher erläutert. Darin zeigen:
- Fig. 1: schematisch einen Kalander mit Blick in Axialrichtung, wobei der Kalander eine erste, eine zweite, sowie eine dritten Walze aufweist, die übereinander angeordnet sind, wobei zwischen der ersten und der zweiten Walze ein erster Spalt für einen ersten Kalandervorgang zum Verdichten des Elektrodenbands gebildet ist, und wobei zwischen der zweiten und der dritten Walze ein zweiter Spalt für einen zweiten Kalandervorgang zum Ausgleich einer Ungleichmäßigkeit der Dicke des Elektrodenbandes gebildet ist,
- Fig. 2: schematisch einen Querschnitt mit der Schnittebene durch die Achsen der ersten und der zweiten Walze durch den Kalander zum Bearbeiten eines Elektrodenbandes, wobei die erste und die zweite Walze aufgrund des ersten Kalandervorgangs verformt sind,
- Fig. 3a: schematisch eine alternative Ausgestaltung des Kalanders, bei der die dritte Walze mit einem Mantel versehen ist,
- Fig. 3b: ausschnittsweise eine Alternative Ausgestaltung des Kalanders gemäß der Fig. 3a, wobei eine unterhalb der dritten Walze angeordnete Stützwalze eine zur Wölbung des Mantels korrespondierende Wölbung aufweist,
- Fig. 4a: schematisch einen Querschnitt eines Stellmittels, anhand dessen eine Wölbung der dritten Achse eingestellt werden kann,
- Fig. 4b: schematisch einen Querschnitt der Bombierwalze gemäß der Ausgestaltung der Fig. 3b, wobei die Schnittebene durch eines der Stellmittel verläuft, und wobei die Stellmittel hinsichtlich der Radialrichtung in der Bombierwalze angeordnet sind,
- Fig. 5a,b: schematisch eine Stützrolle in Draufsicht auf dessen Mantelfläche, wobei die Stützrolle eine Struktur zur Erzeugung einer Querzugspannung auf das Elektrodenband, wobei die Struktur auf der Mantelfläche emporstehende Fortsätze aufweist, die schraubenförmig in und entgegen der Axialrichtung verlaufen bzw. die rippenartig ausgebildet sind und gegen die Achse der Stützwalze geneigt sind, und
- Fig. 6: Schematisch einen Regelkreis zum Einstellen des ersten und/oder des zweiten Spaltes.

Einander entsprechende Teile und Größen sind in allen Figuren stets mit gleichen Bezugszeichen versehen.

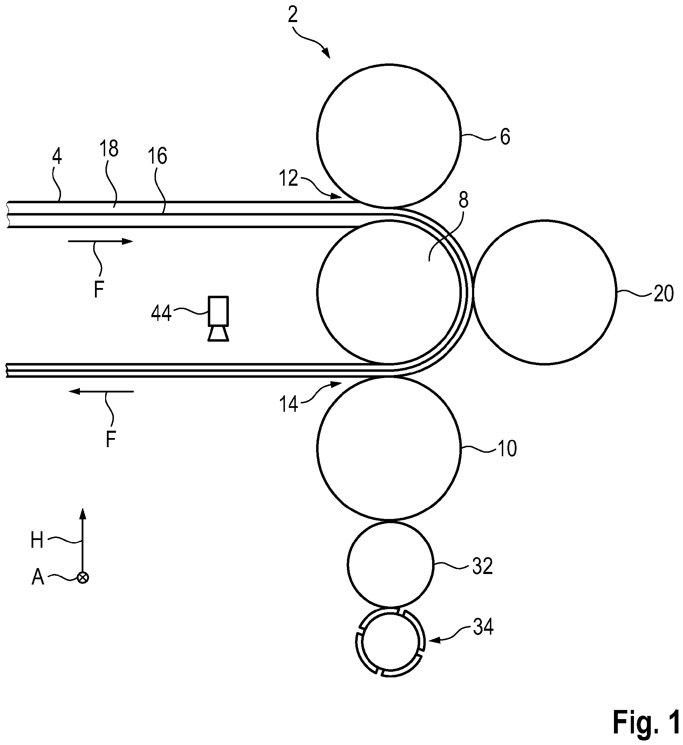

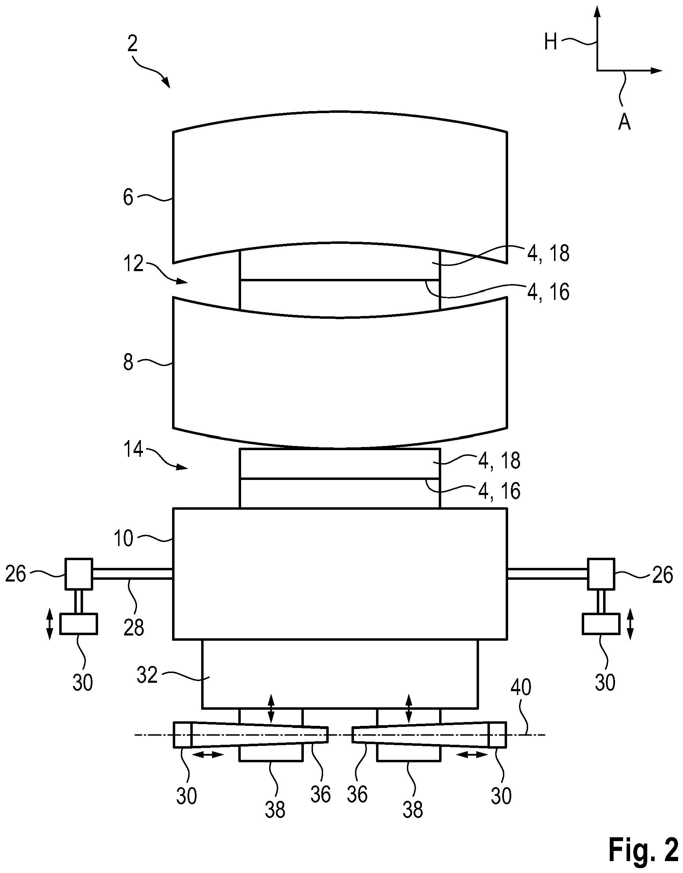

In den Figuren 1 und 2 ist ein Kalander 2 dargestellt, welcher dem Bearbeiten eines Elektrodenbandes 4 dient. Hierzu weist der Kalander 2 eine erste Walze 6, eine zweite Walze 8 und eine dritte Walze 10 auf, welche in einer als Hochrichtung H bezeichneten Richtung übereinander angeordnet sind. Dabei ist bezüglich der Hochrichtung H die zweite Walze 8 über der dritten Walze 10 angeordnet und die erste Walze 6 über der zweiten Walze 8. Mit anderen Worten ist die zweite Walze 8 zwischen der ersten Walze 6 und der dritten Walze angeordnet 10. Dabei sind die Achsen der drei Walzen 6, 8, 10 in einer gemeinsamen Ebene angeordnet. Die Richtung entlang der (Dreh-)Achsen der ersten und der zweiten Walze 6, 8 wird dabei als Axialrichtung bezeichnet und ist im nebenstehenden Richtungsdiagramm mit dem Bezugszeichen A versehen. In der Fig. 1 ist somit die Blickrichtung entlang der Axialrichtung A orientiert.

Zwischen der ersten Walze 6 und der zweiten Walze 8 ist dabei ein erster Spalt 12 gebildet. Zudem ist zwischen der zweiten Walze 8 und der dritten Walze 10 ein zweiter Spalt 14 gebildet. Dabei wird bzw. ist das Elektrodenband 4 zuerst durch den ersten Spalt 12 geführt und anschließend durch den zweiten Spalt 14. Die Förderrichtung des Elektrodenbandes 4 ist dabei in der Fig. 1 anhand entsprechender Pfeile dargestellt, welche mit dem Bezugszeichen F versehen sind.

Der erste Spalt 12 ist dabei derart eingestellt, dass zum Bearbeiten des Elektrodenbandes 4 anhand der ersten Walze 6 und anhand der zweiten Walze 8, also beim ersten Kalandervorgang, eine Linienlast größer oder gleich 1300 N/mm, insbesondere größer oder gleich 1500 N/mm bereitgestellt ist bzw. wird. Sofern das Elektrodenband 4 als Kathodenband ausgebildet ist, ist der erste Spalt 12 derart eingestellt, dass eine Linienlast beispielsweise größer oder gleich 2500N/mm oder vorzugsweise größer oder gleich 3000 N/mm bereitgestellt ist bzw. wird. Für eine ausreichende Steifigkeit weisen die erste Walze 6 und die zweite Walze einen Durchmesser auf, der mehr als 600 mm beträgt. Zudem sind die drei Walzen 6, 8, 10 beispielsweise aus poliertem Stahl gebildet.

Das Elektrodenband 4 ist anhand eines bandförmigen Substrats 16 gebildet, welches beidseitig mit einer Beschichtung 18 mit Aktivmaterial versehen ist. Das Substrat 16 ist dabei mittels einer Metallfolie gebildet.

Die Linienlast und/oder der erste Spalt 12 für den ersten Kalandervorgang ist und/oder wird entsprechend einer vorgegebenen Soll-dicke eingestellt d_{Soll}. Hierbei ist bzw. wird die Spaltbreite des ersten Spalts 12 geringfügig, beispielsweise um 2%, um 3%, oder um 5%, kleiner als die vorgegebene Soll-Dicke d_{Soll} eingestellt, so dass eine elastische Ausdehnung des Elektrodenbandes 4 nach dem ersten Kalandervorgang berücksichtigt ist.

Die beim ersten Kalandervorgang auf die erste und auf die zweite Walze 6 und 8 wirkende (Verformungs-)Kraft bewirkt eine Biegung der ersten und die zweiten Walze 6 und 8 mittig hinsichtlich der Axialrichtung A voneinander weg. Aufgrund dessen ist die Dicke des Elektrodenbandes 4 entlang der Axialrichtung A nicht konstant. Vielmehr weist das Elektrodenband 4, insbesondere dessen Beschichtung 18, eine größere Dicke in einem axial mittleren Bereich auf als in dessen axial endseitigen Bereichen. Mit anderen Worten weist das Elektrodenband 4 eine fassförmigen Querschnitt senkrecht zu dessen Bandlängsrichtung, somit eine Wölbung, auf.

Der zweite Spalt 14 ist und/oder wird für den zweiten Kalandervorgang derart eingestellt, dass eine Ungleichmäßigkeit der Dicke des Elektrodenbandes, insbesondere dessen fassförmige Verdickung aufgrund der Biegung der ersten und/oder zweiten Walze 6 und 8, ausgeglichen wird. Also wird das Längsprofil, mit anderen Worten dessen Spaltbreite entlang der Axialrichtung, des zweiten Spalts 14 zum Ausgleich dieser Ungleichmäßigkeit eingestellt.

Da beim zweiten Kalandervorgang das Material der Beschichtung 18 gleichmäßig verteilt wird und eine weitere Verdichtung dabei nicht oder lediglich in geringfügigem Maße stattfindet, ist für diesen Ausgleich ein vergleichsweise kleiner Druck auf das Elektrodenband 4 notwendig. Folglich ist die Linienlast für den zweiten Kalandervorgang auf weniger als 1/5, insbesondere weniger als 1/7, vorzugsweise 1/10 der Linienlast des ersten Kalandervorgangs eingestellt.

Aufgrund der Anordnung der ersten, der zweiten und der dritten Walze 6, 8, 10 untereinander wird eine Biegung der ersten und zweiten Walze 6 und 8 beim ersten Kalandervorgang anhand des zweiten Kalandervorgangs und der damit einhergehenden Kraft auf die zweite Walze 8 reduziert. Die erste und die zweite Walze 6, 8 werden dadurch weniger beansprucht und die Stärke der Wölbung des Elektrodenbandes aufgrund des ersten Kalandervorgangs ist reduziert.

In den Figuren 1 bis 3 sind der Kalander 2 und das Elektrodenband 4 zum Zwecke einer besseren Erkennbarkeit nicht maßstabsgetreu dargestellt. Insbesondere ist die Biegung der ersten und der zweiten Walze 6 und 8 und die entsprechende Form des Elektrodenbandes übertrieben gezeigt.

Beispielsweise sind die Walzen 6, 8 und 10 beheizbar, so dass der Verdichtungsprozess erleichtert ist. Gemäß einer nicht weiter dargestellten Variante des Kalander 2 ist in diesem Fall eine Kühlwalze vorgesehen, welche das anhand der beheizten Walzen 6, 8 und 10 bearbeitete Elektrodenband 4 abkühlt. Die Kühlwalze ist dabei hinsichtlich der Förderrichtung nach dem zweiten Spalt 14 angeordnet.

Der Kalander 2 weist eine Stützwalze 20 auf. Diese ist bezüglich der Hochrichtung H neben der zweiten Walze 8 angeordnet. Dabei verläuft die Achse 22 der Stützwalze parallel zur Achse der zweiten Walze 8, wobei die Stützwalze 20 hinsichtlich der Förderrichtung des Elektrodenbandes 4 zwischen dem ersten Spalt 12 und dem zweiten Spalt 14 angeordnet ist. Die Stützwalze 20 erfüllt eine Doppelfunktion. Zum einen dient diese dem Andrücken des Elektrodenbandes 4 an die zweite Walze 8, so dass das Elektrodenband 4 zwischen dem ersten und dem zweiten Kalandervorgang um die zweite Walze 8 geführt und eine Faltenbildung vermieden ist. Zum anderen dient die Stützwalze 20 zur Erzeugung einer in Axialrichtung A orientierten Querzugspannung auf das Elektrodenband 4, anhand welcher eine beim ersten Kalandervorgang entstandene Welligkeit und/oder Falten ausgeglichen werden. Mit anderen Worten wird das Elektrodenband 4 anhand der Querzugspannung geglättet.

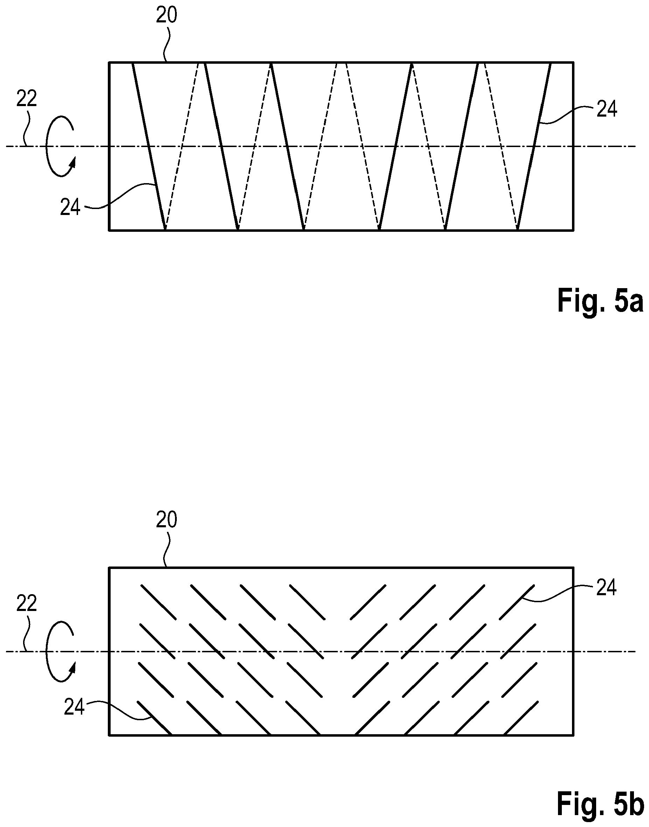

Hierzu weist die Stützwalze 20 an deren Mantelfläche eine emporstehende Struktur auf. In den Figuren 5a und 5b sind zwei Varianten der Stützwalze 20 dargestellt. Die Blickrichtung ist dabei senkrecht zur (Dreh-)Achse 22 der Stützwalze 20.

Gemäß der Variante gemäß der Fig. 5a weist die Struktur zwei in Axialrichtung nebeneinander angeordnete und sich entlang der Mantelfläche schraubenförmig erstreckende Fortsätze 24 auf. Dabei weisen die beiden Fortsätze 24 unterschiedliche Drehrichtungen auf. Die in dieser Ansicht von der Stützwalze 20 verdeckten Teile der Struktur sind strichliniert dargestellt. Die Drehrichtung ist dabei anhand eines entsprechenden Pfeils um die Achse 22 dargesetellt.

Gemäß der alternativen Ausgestaltung der Fig. 5b umfasst die Struktur mehrere rippenartig auf der Mantelfläche emporstehende Fortsätze 24, wobei in einem ersten Bereich die Fortsätze 24, projiziert auf eine die Achse 22 der Stützwalze 20 aufweisenden Ebene, um 45° gegen diese Achse geneigt sind. In einem zweiten Bereich, welcher in Axialrichtung A neben dem ersten Bereich angeordnet ist, sind die Fortsätze 24 um -45° in der projizierten Ebene gegen die Achse geneigt.

In beiden Varianten ist beträgt eine Höhe der Fortsätze 50 µm bis 150 µm, vorzugsweise 100 µm.

Zum Einstellen des zweiten Spaltes 14 wird die die Achse der dritten Walze verfahren und/oder gedreht. Hierzu sind die Lager 26 für die Achse 28 der dritten Walze 10 unabhängig voneinander zur zweiten Walze 8 hin oder von dieser weg verfahrbar. Hierzu sind die Lager 26 jeweils mit einem Piezoelement 30 gekoppelt, das entsprechend einer an diesem anliegenden Spannung ausgedehnt ist.

Zum Einstellen des zweiten Spaltes 14 wird zusätzlich oder alternativ hierzu eine Wölbung der dritten Walze 10 eingestellt. Die Wölbung der dritten Walze 10 ist also veränderbar, insbesondere einstellbar. Hierzu weist der Kalander 2 eine sogenannte Bombierwalze 32 auf, welche hinsichtlich der Hochrichtung H unterhalb der dritten Walze 10 angeordnet ist. Also ist die Achse der Bombierwalze 32 in der mittels der Achsen der ersten, der zweiten und der dritten Walze 6, 8, 10 aufgespannten Ebene angeordnet, wobei die dritte Walze 10 zwischen der zweiten Walze 8 und der Bombierwalze 32 angeordnet ist. Dabei liegt die Bombierwalze 32 an der dritten Walze 10 an. Weiterhin ist hinsichtlich der Hochrichtung H unterhalb der Bombierwalze 32 zumindest ein Stellmittel 34, gemäß der Ausführung der Figuren 1 bis 3 zwei Stellmittel 34, angeordnet. Diese dienen dazu, eine in Richtung der zweiten Walze 8 gerichtete, also in Hochrichtung H orientierte, Kraft auf die Bombierwalze 32 zu bewirken, sodass die Bombierwalze 32 sowie die an dieser anliegende dritte Walze 10 entsprechend verformt, also gewölbt, wird und/oder ist. Die beiden Stellmittel 34 sind in Axialrichtung A zueinander beabstandet.

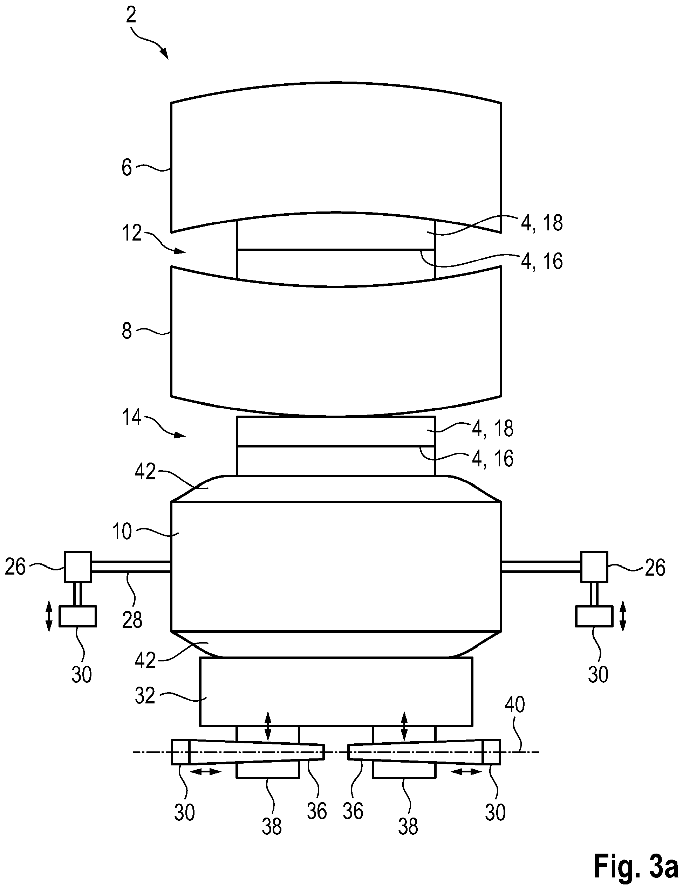

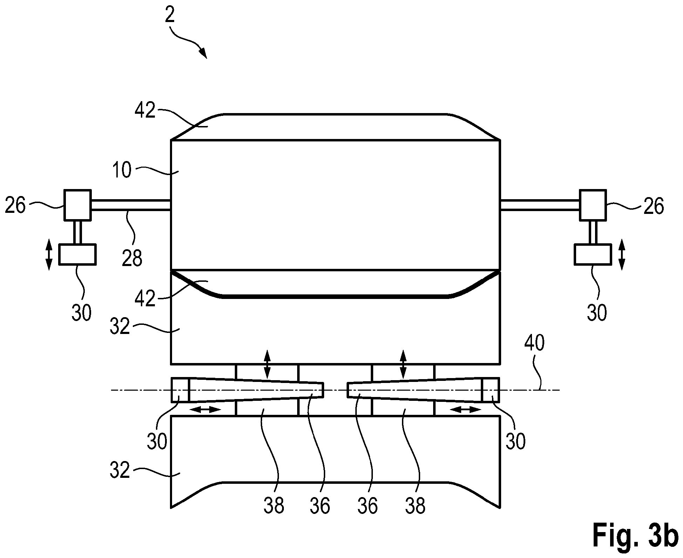

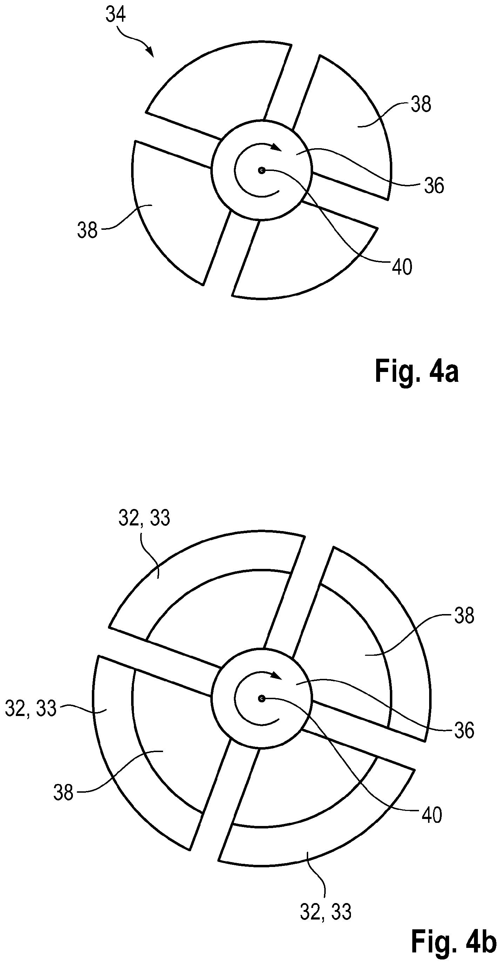

Jeder der Stellmittel 34 weist einen kegelstumpfförmigen Dorn 36 auf. Die Dorne 36 sind dabei jeweils anhand eines mit diesem gekoppelten Piezoelements 30 in Axialrichtung A verfahrbar, was anhand entsprechender Pfeile in den Figuren 2 und 3 angedeutet ist. Wie insbesondere in der Fig. 4a und der Fig. 4b erkennbar ist, ist jeder der Dorne 36 ist an dessen Kegelmantel von zueinander separaten Backen 38 umgeben. Die Backen 38 sind hinsichtlich der Axialrichtung A feststehend, allerdings radial bezüglich einer (Dreh-)Achse 40 des zugeordneten Dorns 36 verstellbar. Die am Dorn 36 anliegende Fläche der jeweiligen Backen 38 ist dabei korrespondierend zum Dorn 36 um den halben Öffnungswinkel des kegelstumpfförmigen Dorns 36 gegen dessen Achse 40 geneigt. Für eine geeignete Kraftumsetzung beträgt dabei der Öffnungswinkel des bzw. jedes kegelstumpfförmigen Dorns 36 zwischen 1° und 4°.

Zusammenfassend sind die Backen 38 umfangsseitig des jeweiligen Dorns 36 angeordnet. Bei Verfahren der Dorns 36 in Axialrichtung A werden folglich die Backen 38 in Radialrichtung verschoben, so dass diese gegen die Bombierwalze 32 drücken und eine entsprechende Kraft in Richtung der zweiten Walze 8 erzeugen. Jeder der Dorne 36 wirkt also nach Art eines Spreizdorns.

Die Backen 38 sind radial außenseitig kreissegmentartig geformt, so dass diese an deren radialen Enden gerundet sind und an der Bombierwalze 32 abrollen können. Die Backen 38 decken dabei den jeweiligen Dorn 36 in Umfangsrichtung möglichst vollständig ab. Aufgrund dessen und aufgrund des vergleichsweise kleinen Öffnungswinkels des jeweiligen Dorn 36 ist ein Einfluss der in Umfangsrichtung zwischen den Backen 38 gebildete Spalte auf die auf die Bombierwalze 32 wirkende Kraft vernachlässigbar.

In der Fig. 3a ist eine alternative Ausgestaltung des Kalanders 2 dargestellt, bei welcher die dritte Walze 10 unter Bildung einer Bombierung mit einem Mantel 42 versehen ist. Dieser ist an der Mantelfläche der dritten Walze 10 angeordnet. Mit anderen Worten umfasst der Mantel 42 die dritte Walze 10 umfangsseitig. Beispielsweise ist der Mantel 42 für die Bearbeitung eines als Kathodenbandes ausgebildeten Elektrodenbandes aus Stahl gebildet und radial außenseitig hinsichtlich dessen Achse mit Chrom beschichtet. Weiter beispielsweise ist der Mantel 42 für die Bearbeitung eines als Anodenband ausgebildeten Elektrodenbandes 4 aus einem gummiartigen Kunststoff gebildet und radial außenseitig hinsichtlich dessen Achse mit einer Chromschicht versehen.

In der Fig. 3b ist eine weitere Alternative des Kalanders 2 dargestellt. Dabei ist der Kalander 2 zum Zwecke einer besseren Übersichtlichkeit lediglich teilweise dargestellt, insbesondere sind die erste Walze 6 und die zweite Walze 8 nicht weiter dargestellt. Die Bombierwalze 32 umfasst dabei die Stellmittel 34 umfangsseitig. Mit anderen Worten sind die Stellmittel 34 innerhalb der Bombierwalze 32 aufgenommen. Die Bombierwalze 32 ist dabei vorzugsweise mehrteilig ausgebildet, so dass diese in Radialrichtung ausdehnbar ist. Beispielsweise weist die Bombierwalze 32 in analoger Weise zu den Backen des Stellmittels 34 hierzu (Walzen-)Backen 32a auf, welche an Ebenen zueinander getrennt sind, welche Ebenen jeweils die Drehachse der Bombierwalze 32 umfassen, vgl. Fig. 4b. Dabei sind die Backen 33 anhand eines nicht weiter dargestellten Haltemittels miteinander gehalten.

Zudem weist die Bombierwalze 32 eine Wölbung auf, die zur Wölbung der dritten Walze 10 aufgrund des Mantels 42 korrespondiert. Die Bombierwalze 32 weist also mittig bezüglich deren axialer Ausdehnung einen kleineren Durchmesser auf als an deren axialen Enden.

In nicht näher dargestellten Varianten ist die Bombierwalze gemäß der Fig. 3a entsprechend den Ausführungen zu den Figuren 3b und 4b ausgebildet, wobei diese keine zu dessen Drehachse hin gerichtete Wölbung aufweist.

Wie in den Figuren 1 bis 3a erkennbar ist, weist der Kalander 2 ein als Ultraschall-Messgerät ausgebildetes Messgerät 44 auf, anhand dessen an mindestens drei in Axialrichtung A zueinander beabstandeten Stellen die Dicken d_{ist,n} des Elektrodenbandes 4 ermittelt werden kann. "d_{ist,n}" repräsentiert hierbei die ermittelte Dicke an der jeweiligen, "n-ten" Messstelle.

Weiterhin umfass der Kalander 2 ein Regelgerät 46. Dieses dient dem Einstellen der (konstanten) Spaltbreite des ersten Spaltes 12 sowie dem Einstellen des Längsprofils des zweiten Spaltes 14. Hierzu stellt das Regelgerät 46 die Ausdehnung der Piezoelemente 30 und damit einhergehend die Lage und Orientierung der Achse 28 der dritten Walze 10 und/oder die Wölbung der dritten Walze 10 ein.

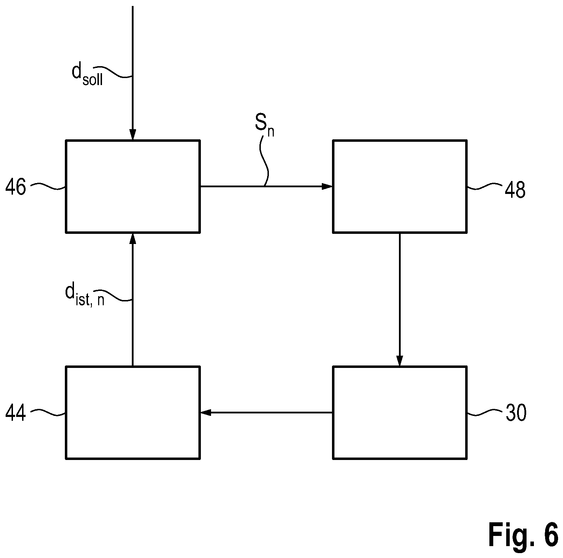

Wie in der Fig. 6 dargestellt ist, wird das Längsprofil des zweiten Spalt 14 geregelt. Hierbei wird dem Regelgerät 46 zum einen eine vorgegebene Soll-Dicke d_{Soll} für die Dicke des Elektrodenbands 4 nach dem zweiten Kalandervorgang sowie die anhand des Messgeräts 44 ermittelten Dicken d_{ist,n} zugeführt. Das Regelgerät 46 vergleicht die ermittelten Dicken d_{ist,n} mit der vorgegebenen Soll-Dicke d_{Soll}. Anhand der Differenzen aus der Soll-Dicke d_{Soll} und den ermittelten Dicken d_{ist,n} werden zum Einstellen der Piezoelements 30 jeweils ein Einstellsignal Sₙ bestimmt. Die Einstellsignale Sₙ werden einem mit dem jeweiligen Piezoelement 30 verbundenen Potentiometer zugeführt. Infolge dessen wird die vom jeweiligen Potentiometer 48 ausgegebene Spannung an das mit diesem verbundene Piezoelement 30 eingestellt. Beispielsweise wird hierzu ein nicht weiter dargestellter Kontaktschieber des jeweiligen Potentiometers 48 mittels eines Schrittmotors verschoben. Der Index "n" bei "Sₙ" repräsentiert hierbei, dass mehrere Einstellsignale bestimmt werden, wobei jeweils ein Einstellsignal, nämlich das "n-te" Einstellsignal zum Einstellen des jeweiligen "n-ten" Piezoelements 30 vorgesehen ist. Also wird die am jeweiligen Piezoelement 30 anliegende Spannung entsprechend des jeweiligen Steuersignals Sₙ geändert. Infolgedessen dehnt sich das jeweilige Piezoelement 30 aus oder zieht sich zusammen. Somit wird das mit dem jeweiligen Piezoelement 30 gekoppelte Lager 26 der Achse 28 der dritten Walze 10 bzw. der mit dem Piezoelement 30 gekoppelte Dorn 36 verfahren und der zweite Spalt 14 eingestellt.

Zudem wird anhand des Regelgeräts 46 die Spaltbreite des ersten Spalts 12 eingestellt, insbesondere verändert, sofern alle ermittelten Dicken d_{ist,n} oder ein aus diesen bestimmter Wert, beispielsweise ein Mittelwert, die Soll-Dicke d_{Soll} über- oder unterschreiten.

Zusammenfassen wird der erste Spalt 12 und/oder der zweite Spalt 14 in Abhängigkeit der anhand des Messgeräts 44 ermittelten Dicken d_{ist,n} des Elektrodenbandes 4 eingestellt. Das Einstellen des ersten und/oder des zweiten Spalts 14 erfolgt dabei im Betrieb des Kalanders 2.

In nicht näher dargestellter Weise umfasst der Kalander 2 eine Einheit zum Absaugen von Staub nach dem zweiten Kalandervorgang. Zusätzlich oder Alternativ weist der Kalander 2 eine weitere Stützrolle auf, welche das Elektrodenband 4 zur Vermeidung von Falten beim Aufwickeln auf eine Aufwickelrolle gegen diese drückt.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Kalander
- 4: Elektrodenband
- 6: erste Walze
- 8: zweite Walze
- 10: dritte Walze
- 12: erster Spalt
- 14: zweiter Spalt
- 16: Substrat
- 18: Beschichtung
- 20: Stützwalze
- 22: Achse der Stützwalze
- 24: Fortsatz
- 26: Lager
- 28: Achse der dritten Walze
- 30: Piezoelement
- 32: Bombierwalze
- 33: Walzenbacke34 Stellmittel
- 36: Dorn
- 38: Backe
- 40: Achse eines Dorns
- 42: Mantel für die dritte Walze
- 44: Messgerät
- 46: Regelgerät
- 48: Potentiometer
- d_{ist,n}: Dicke des Elektrodenbandes an einer Stelle
- d_{Soll}: Soll-Dicke
- Sₙ: Einstellsignal für eines der Piezoelemente

- A: Axialrichtung
- F: Förderrichtung
- H: Hochrichtung

## Patentansprüche

1. Verfahren zum Bearbeiten eines Elektrodenbandes (4) mittels eines Kalanders (2), welcher eine erste Walze (6), eine zweite Walze (8), sowie eine dritten Walze (10) aufweist, wobei die erste Walze (6), die zweite Walze (8), sowie die dritte Walze (10) übereinander angeordnet sind, und wobei für einen ersten Kalandervorgang ein erster Spalt (12) zwischen der ersten Walze (6) und der zweiten Walze (8) und für einen zweiten Kalandervorgang ein zweiter Spalt (14) zwischen der zweiten Walze (8) und der dritten Walze (10) gebildet ist,
- wobei beim ersten Kalandervorgang das Elektrodenband (4) entsprechend einer vorgegebenen Soll-Dicke (d_{Soll}) verdichtet wird,
- wobei der zweite Spalt (14), insbesondere dessen Längsprofil, derart eingestellt wird, dass eine Ungleichmäßigkeit der Dicke des Elektrodenbandes (4) ausgeglichen oder zumindest reduziert wird.

2. Verfahren nach Anspruch 1,
wobei zum Einstellen des zweiten Spaltes (14) die Achse (28) der dritten Walze (10) verfahren und/oder gedreht wird.

3. Verfahren nach Anspruch 1 oder 2,
wobei zum Einstellen des zweiten Spaltes (14) eine Wölbung der dritten Walze (10) eingestellt wird.

4. Verfahren nach einem der Ansprüche 1 bis 3,
wobei die Dicke des Elektrodenbandes (4) nach dem zweiten Kalandervorgang an mindestens drei, vorzugsweise an mindestens vier, in Axialrichtung (A) beabstandeten Stellen ermittelt wird, und wobei der erste Spalt (12) und/oder der zweite Spalt (14) in Abhängigkeit der ermittelten Dicken (d_{ist,n}) eingestellt werden.

5. Kalander (2) zum Bearbeiten eines Elektrodenbandes (4), insbesondere gemäß dem Verfahren nach einem der Ansprüche 1 bis 4, mit einer ersten Walze (6), einer zweiten Walze (8), sowie mit einer dritten Walze (10),
- wobei zwischen der ersten Walze (6) und der zweiten Walze (8) ein erster Spalt (12) für einen ersten Kalandervorgang zum Verdichten des Elektrodenbandes (4) gebildet ist, und wobei zwischen der zweiten Walze (8) und der dritten Walze (10) ein zweiter Spalt (14) für einen zweiten Kalandervorgang zum Ausgleich einer Ungleichmäßigkeit der Dicke des Elektrodenbandes (4) gebildet ist,
- wobei die erste Walze (6), die zweiten Walze (8), sowie die dritte Walze (10) übereinander angeordnet sind,
- wobei der zweite Spalt (14), insbesondere dessen Längsprofil, einstellbar ist.

6. Kalander (2) nach Anspruch 5,
**dadurch gekennzeichnet,**
**dass** anhand der ersten Walze (6) und anhand der zweiten Walze (8) eine Linienlast größer oder gleich 1300 N/mm, insbesondere größer oder gleich 1500N/mm, zur Bearbeitung des Elektrodenbandes (4) bereitstellbar ist.

7. Kalander (2) nach Anspruch 5 oder 6,
**gekennzeichnet durch**
eine Stützwalze (20) zum Andrücken des Elektrodenbandes an die zweite Walze (8) nach dem ersten Kalandervorgang, wobei die Stützwalze (20) an deren Mantelfläche eine emporstehende Struktur zur Erzeugung einer Querzugspannung auf das Elektrodenband (4) aufweist.

8. Kalander (2) nach Anspruch 7,
**dadurch gekennzeichnet,**
**dass** die Struktur von der Mantelfläche der Stützwalze (20) emporstehende Fortsätze (24) aufweist, welche schraubenförmig auf der Mantelfläche verlaufen, oder dass die Fortsätze (24) rippenartig auf der Mantelfläche emporstehen, wobei die Fortsätze (24) in einer Draufsicht auf die Achse der Stützwalze (20) gegen diese, vorzugsweise um 30° bis 60°, insbesondere um 45°, geneigt sind.

9. Kalander (2) nach einem der Ansprüche 5 bis 8,
**dadurch gekennzeichnet,**
**dass** eine Wölbung der dritten (10) Walze einstellbar ist.

10. Kalander nach Anspruch 9,
**dadurch gekennzeichnet,**
**dass** zum Einstellen der Wölbung der dritten Walze (10) eine Bombierwalze (32) auf derjenigen Seite der dritten Walze (10) angeordnet ist, welche der zweiten Walze (8) abgewandten ist, wobei auf derjenigen Seite der Bombierwalze (32), welche der dritten Walze (10) abgewandt ist, zumindest ein Stellmittel (34) angeordnet ist, und wobei das oder jeder der Stellmittel (34) dazu eingerichtet ist, eine Kraft in Richtung der zweiten Walze (8) auf die Bombierwalze (32) zu bewirken.

11. Kalander (2) nach Anspruch 10,
**dadurch gekennzeichnet,**
**dass** das Stellmittel (34) einen Dorn (36) aufweist, welcher in Axialrichtung (A) verfahrbar ist, wobei an diesem umfangsseitig Backen (38) anliegen, die beim Verfahren des Dorns (36) radial bezüglich der Achse (40) des Dorns (36) verschoben werden.

12. Kalander (2) nach einem der Ansprüche 5 bis 11,
**dadurch gekennzeichnet,**
**dass** die dritte Walze (10) zur Bildung einer Bombierung mit einem Mantel (42) versehen ist.

13. Kalander (2) nach einem der Ansprüche 5 bis 12,
**dadurch gekennzeichnet,**
**dass** die Lager (26) der Achse (28) der dritten Walze (10) unabhängig voneinander zur zweiten Walze (8) hin oder von dieser weg verfahrbar sind.

14. Kalander (2) nach einem der Ansprüche 9 bis 13,
**dadurch gekennzeichnet,**
- **dass** zum Verfahren der Lager (26) der Achse (28) der dritten Walze (10) Piezoelemente (30) vorgesehen sind, und/oder
- **dass** zum Verfahren des oder jedes Dorns (36) jeweils ein Piezoelement (30) vorgesehen ist.

15. Kalander (2) nach einem der Ansprüche 5 bis 14,
**gekennzeichnet durch**
ein Messgerät (44), insbesondere Ultraschall-Messgerät, zur Bestimmung der Dicke des Elektrodenbandes (4) an mindestens drei in Axialrichtung (A) zueinander beabstandeten Stellen.

16. Kalander (2) nach einem der Ansprüche 5 bis 15,
**gekennzeichnet durch**
ein Regelgerät (46) zum Einstellen des zweiten Spaltes (14), insbesondere in Abhängigkeit der anhand des Messgeräts (44) ermittelten Dicken (d_{ist,n}) des Elektrodenbandes (4), **durch** Verfahren zumindest eines der Lager (26) der Achse (28) der dritten Walze (10) und/oder **durch** Einstellen der Wölbung der dritten Walze (10).
